# EUROPEAN PATENT APPLICATION

(11) **EP 1 150 469 A2**
(43) Date of publication of application: **31.10.2001**
(21) Application number: 01110343.9
(22) Date of filing: 26.04.2001
(51) Int. Cl.: H04L 27/26

(54) **Retuning in a DAB receiver**

(30) Priority: 28.04.2000 JP 2000128827
(71) Applicant: KABUSHIKI KAISHA KENWOOD, Shibuya-ku, Tokyo 150-8501 (JP)
(72) Inventor: Asami, Masaru, Hamura-shi, Tokyo 205-0014 (JP)
(74) Representative: Patentanwälte Leinweber & Zimmermann

(57) **Abstract**

A search time for a digital broadcasting receiver is shortened. The digital broadcasting receiver comprising, having: a front end unit for converting a frequency of a received signal of digital broadcasting into a predetermined intermediate frequency, the received signal including at least a first modulated wave having a first transmission frame length and transmitted in a first frequency band and a second modulated wave having a second transmission frame length shorter than the first transmission frame length and transmitted in a second frequency band; and a NULL symbol detecting unit for detecting a NULL symbol in a transmission frame of the received signal, wherein when a seek operation is instructed, the seek operation is first performed in the second frequency band and when the NULL symbol is detected at some reception frequency, the seek operation is stopped, whereas if the NULL symbol is not detected in the second frequency band, the seek operation is subsequently performed in the first frequency band.

## Description

### BACKGROUND OF THE INVENTION

### 1. Field of the Invention

The present invention relates to a digital broadcasting receiver and its search method, and more particularly to a digital audio broadcasting (hereinafter abbreviated to DAB where applicable, DAB being practically used in Europe) receiver and its search method.

### 2. Description of the Related Art

In digital broadcasting, audio information signals, image information signals, character information signals and the like are compressed in a predetermined format. Information signals as data signals of a plurality of channels are multiplexed and transmitted in order to provide a plurality of services. As a system for transmitting/receiving data signals including digital audio signals in the predetermined format, a DAB system in conformity with the European Standards (Eureka 147) is practically used.

In the DAB system, one ensemble is constituted of a plurality of services each being constituted of a plurality of components. The details thereof are described in the DAB specifications and so the description thereof is omitted.

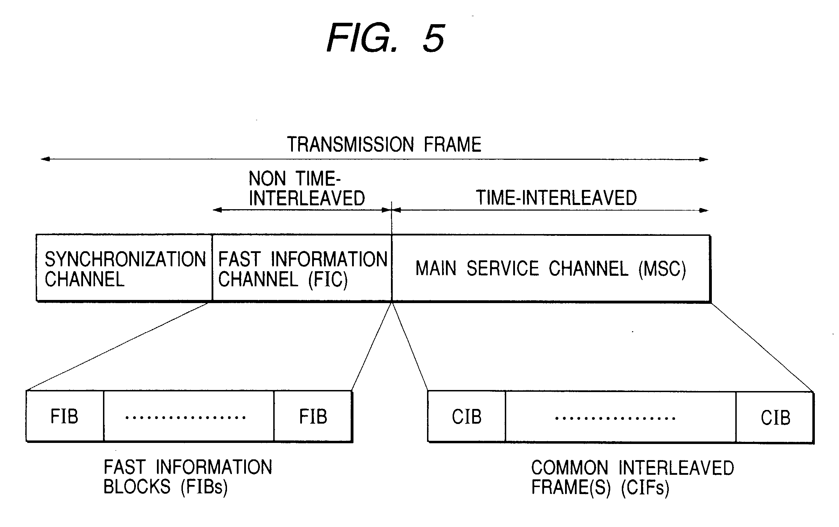

Fig. 5 is a diagram showing the structure of a transmission frame of the DAB system. A DAB signal is modulated by orthogonal frequency division multiplex (OFDM) and transmitted as an OFDM signal. The transmission frame shown in Fig. 5 is derived from a demodulated OFDM signal.

As shown in Fig. 5, the transmission frame of the demodulated OFDM signal includes a synchronization channel, a fast information channel (FIC) and a main service channel (MSC). FIC is used for transmitting information necessary for a receiver to tune in to a program and supplemental information on the program, whereas MSC is used for transmitting audio and data sub-channels.

FIC of one frame has three data blocks called a fast information block (FIB). MSC has one to four data blocks called a common interleaved frame (CIF) although the number of blocks depends on the transmission mode. MSC is time-interleaved in the unit of CIF. A plurality of sub-channels are multiplexed on CIF, one sub-channel corresponding to one program. When a user receives one program, the user selects a corresponding sub-channel from CIF and tunes in to the program.

In the DAB system, when an ensemble is received, information on a plurality of services and components contained in the ensemble can be obtained so that it is possible to instantly switch to a different service or component without changing the tuning frequency.

The synchronization channel is positioned at the head of the transmission frame. In this synchronization channel, a NULL symbol for coarse synchronization is disposed at the head, and a phase reference symbol (hereinafter described as PRS where applicable) is disposed in the succeeding fields. The reference phase symbol represents a reference phase to be used for OFDM demodulation (e.g., differential QPSK demodulation). In a DAB receiver, each program is tuned in in the unit of ensemble. When another ensemble is to be received, the reception frequency is changed. In changing the reception frequency, a receivable ensemble is searched and received by a search operation which is also called an ensemble up/down. When a user starts receiving digital broadcasting, a receivable ensemble is searched and received by the search operation.

In the search operation, as a user depresses an up button, the search is performed from a lower frequency to a higher frequency, whereas the user depresses a down button, the search is performed from a higher frequency to a lower frequency. When the NULL symbol is detected, the search is terminated. In order to prevent an erroneous detection of the NULL symbol, if the NULL symbol is detected consecutively three times or more, it is judged that the NULL symbol was detected, and the search is terminated. If the NULL symbol is not detected consecutively three times or more, it is judged that the NULL symbol was not detected.

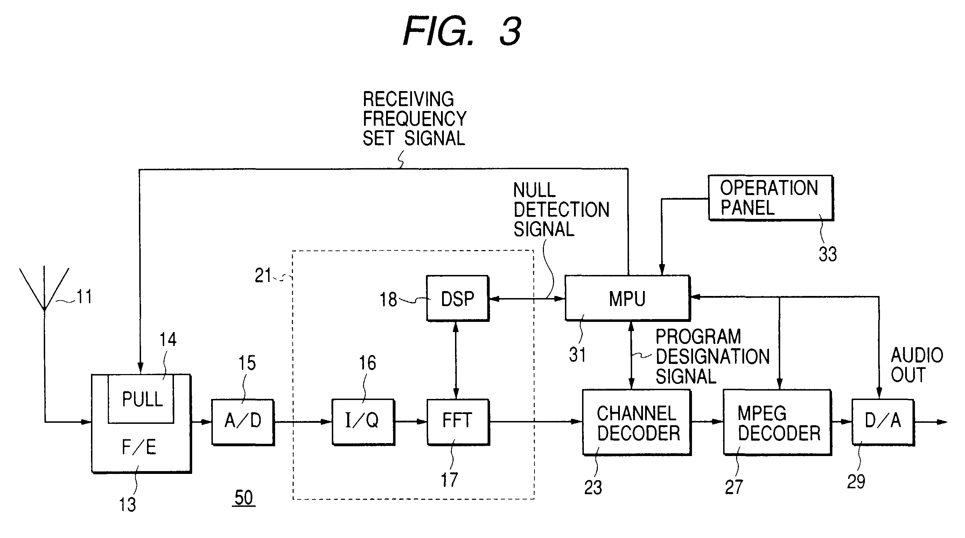

Fig. 3 is a block diagram showing an example of a digital broadcasting receiver. A conventional digital broadcasting receiver will be described with reference to Fig. 3. In the following description, a DAB receiver is used by way of example. It is assumed that in the DAB system, orthogonal frequency division multiplex (OFDM) is adopted as the modulation method.

Referring to Fig. 3, a reception start and search start of the digital broadcasting receiver is instructed by a user from an operation panel 33 to an MPU 31. During the search operation, frequency information of a DAB broadcasting station to be received is supplied from MPU 31 to PLL 14 of a front end 13, as a reception frequency setting signal.

In the front end 13, a DAB carrier having a specific frequency is received via an antenna 11, processed and converted into a predetermined intermediate frequency signal (IF signal) which is output to an analog/digital converter (A/D converter) 15. The A/D converter 15 converts an analog signal into a digital signal which is supplied to an I/Q unit 16. The I/Q unit 16, an FFT unit 17 and a DSP 18 constitute an OFDM demodulator 21.

The digital signal input to the I/Q unit 16 is divided into an I signal and a Q signal and supplied to the FFT unit 17 so that an OFDM signal can be processed at the succeeding stage. The FFT unit 17 and DSP (digital signal processor) 18 perform a fast Fourier transform, and the result is supplied to a channel decoder 23. The channel decoder 23 performs de-interleaving, de-puncturing, error code detection and correction and the like. With de-interleaving, the original order of signals is recovered, and with de-puncturing, code bits not transmitted are inserted to recover original data. A microprocessor unit (MPU) 31 corrects error codes and calculates a code error rate. If the code error rate is larger than a predetermined value, a mute control signal is supplied to a D/A converter 29 in order to stop the demodulation operation and a demodulated signal output operation. The operation of the channel decoder 23 will be detailed later.

Compressed audio data is supplied from the channel decoder 23 to an MPEG decoder 27. The MPEG decoder 27 demodulates the compressed audio data to release the compression. The demodulated data is converted into analog data by a digital/analog converter (D/A converter) 29 to be output as analog audio signals.

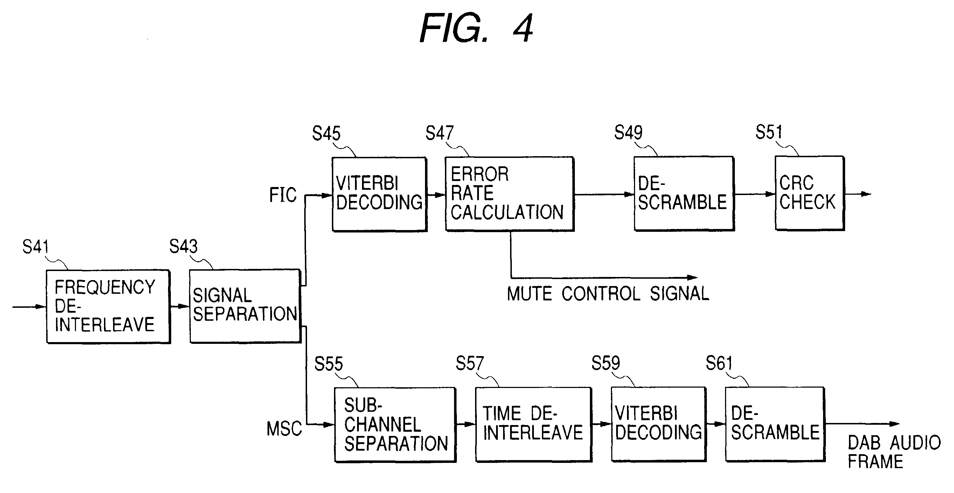

Fig. 4 is a flow chart illustrating a signal processing operation to be executed by the channel decoder. At Step S41 shown in Fig. 4, a demodulated OFDM signal output from the OFDM demodulator 21 shown in Fig. 3 is processed.

First, de-interleaving is performed at Step S41 to release the frequency interleaving performed to randomize errors on the frequency axis, so that a transmission frame such as shown in Fig. 5 can be obtained.

At Step S43, FIC and MSC are separated from the demodulated OFDM signal. At Step S45, data in FIC is subjected to Viterbi decoding, and approximately at the same time at Step S47 a code error rate is calculated. Steps S45 and S47 are executed by MPU 31 generally at the same time. If the code error rate is larger than a predetermined value, a mute control signal is supplied to the D/A converter 29 in order to stop the demodulation operation and a demodulated signal output operation. The code error rate at Step S47 is calculated by comparing error corrected data by Viterbi decoding at Step S45 with data before error correction. At Step S49 scramble is released (de-scramble), and at Step S51 a CRC check is performed to supply its result to MPU 31 as a control signal.

At Step S55, data in a sub-channel corresponding to a program tuned in by a user among a plurality of sub-channels is separated in accordance with a program designating signal shown in Fig. 3. Next, at Step S57 time de-interleaving is performed to release time interleaving performed to randomize errors on the time axis. Time de-interleaving is not performed for FIC. At Step S59, Viterbi decoding is performed, and at Step S61 de-scrambling is performed, to thereby output a DAB audio frame to the MPEG decoder 27 shown in Fig. 3. The Viterbi decoding at Step S59 performs code error detection and correction of convolutionally coded data, similar to FIC.

OFDM as a DAB modulation method is one kind of multi-carrier modulation methods, and is said that it allows stable reception in mobile communications which is less susceptible to multi-path and fading. However, in practice, received data has some code errors because of various reasons. Therefore, as described earlier, data in FIC or MSC is subjected to error correction by Viterbi decoding, and the error corrected data is re-encoded and compared with the data before error correction to calculate the code error factor. If the code error factor is larger than a predetermined value, an output from the D/A converter 29 is stopped.

The following four transmission modes are prepared for the DAB transmission frame, an ensemble being transmitted by using one of the four modes. In a transmission mode 1, the transmission frame period is 96 ms and the carrier interval is 1 kHz. In a transmission mode 2, the transmission frame period is 24 ms and the carrier interval is 4 kHz. In a transmission mode 3, the transmission frame period is 24 ms and the carrier interval is 8 kHz. In a transmission mode 4, the transmission frame period is 48 ms and the carrier interval is 2 kHz. The transmission frame period may differ depending upon the transmission mode as described above.

A specific search or seek operation will be described. When a search operation is instructed, the reception frequency is sequentially tuned in to the frequency of each digital broadcasting stored in a memory of MPU. When a NULL symbol is detected at some reception frequency, the search operation is stopped to make an unrepresented automatic frequency adjusting means adjust the reception frequency. If the NULL symbol is not detected, the search operation continues further. A NULL symbol detecting means for detecting a NULL symbol is constituted of the FFT unit 17, DSP 18 and the like of the OFDM modulator 21.

The NULL symbol detecting means measures the time length of the NULL symbol. If the time length corresponds to the NULL symbol length of one of the transmission modes stipulated by DAB, a NULL symbol detecting signal is output to an unrepresented timing synchronization circuit, and a transmission mode signal detected from the time length is also output. The period of the NULL symbol, i.e., the transmission frame period is also detected.

The search operation for receiving an ensemble is stopped when the NULL symbol disposed at the head of the DAB transmission frame is detected, as described above.

In order to prevent an erroneous detection of the NULL symbol, if the NULL symbol is detected consecutively three times or more, it is judged that the NULL symbol was detected, and the search is terminated. It takes therefore a time of about four frames to detect NULL symbols. Specifically, the transmission mode 1 takes a time of about 384 ms, the transmission modes 2 and 3 take a time of about 96 ms, and the transmission mode 4 takes a time of about 192 ms. Since a number of DAB transmission frequencies are set at a fine frequency step, there are many frequencies to be searched so that it takes a long time to complete the search operation.

From these reasons, the search operation for a conventional digital broadcasting receiver is not automatically performed immediately after the power is turned on, but it starts in response to a user instruction while the digital broadcasting receiver is not receiving an information signal or an apparatus other than the digital broadcasting receiver is operating.

The invention has been made in consideration of the above problems and aims to provide a digital broadcasting receiver with a short search time and a search method of such a digital broadcasting receiver. The invention also aims to provide a digital broadcasting receiver capable of shortening a time period from a reception start instruction to a display start of digital broadcasting.

### SUMMARY

The present invention is directed to an improved digital broadcasting receiver which is adapted to receive a frequency division multiplex modulated signal to reproduce a broadcasting information signal. And, this improved digital broadcasting receiver is particularly unique in that a search operation is first performed for one frequency band having a shorter transmission frame length, and if an ensemble is not found in the one frequency band, the search operation is subsequently performed for another frequency band having a longer transmission frame length.

In order to achieve the above objects of the invention, the present invention provides the following digital broadcasting receivers and the search methods for the digital broadcasting receivers.

According to a first aspect of the invention, there is provided a digital broadcasting receiver comprising: a front end unit for converting a frequency of a received signal of digital broadcasting into a predetermined intermediate frequency, the received signal including at least a first modulated wave having a first transmission frame length and transmitted in a first frequency band and a second modulated wave having a second transmission frame length shorter than the first transmission frame length and transmitted in a second frequency band; and NULL symbol detecting means for detecting a NULL symbol in a transmission frame of the received signal, wherein when a seek operation is instructed, the seek operation is first performed in the second frequency band and when the NULL symbol is detected at any reception frequency, the seek operation is stopped, whereas if the NULL symbol is not detected in the second frequency band, the seek operation is subsequently performed in the first frequency band.

According to the first aspect of the invention, in the search operation for the digital broadcasting receiver, the search operation starts first for the second frequency band of broadcasting having a shorter transmission frame period, and the search operation is then performed for the first frequency band of broadcasting having a longer transmission frame period, if necessary after the second frequency band.

A NULL symbol is a non-signal section having a predetermined time length in a transmission frame constituted of a plurality of symbols partitioned by a predetermined time length. In order to avoid erroneous detection of the NULL symbol during the search operation, the search operation is terminated after a predetermined number of NULL symbols are detected consecutively. It takes therefore a time corresponding to at least several times of the transmission frame period to detect NULL symbols. When the NULL symbols are consecutively detected a predetermined number of times, it is judged that a receivable ensemble is detected, and thereafter the search operation is terminated. The search time can therefore be shortened more than if the search operation starts for the first frequency band.

In the present invention, the modulated wave is typically an OFDM modulated wave.

In the digital broadcasting receiver of the present invention, the search operation may start automatically after a power of the digital broadcasting receiver is turned on.

Even if the search operation automatically starts without a user instruction of a search start, because of a short search time, the search operation does not hinder so much the operation of other apparatus, and sounds of the received digital broadcasting can be output in a short time after the power-on.

According to a second aspect of the invention, there is provided a search method for use in a digital broadcasting receiver capable of receiving a digital broadcasting signal including at least a first modulated wave having a first transmission frame length and transmitted in a first frequency band and a second modulated wave having a second transmission frame length shorter than the first transmission frame length and transmitted in a second frequency band, wherein: when a seek operation is instructed, the seek operation is performed first in the second frequency band and when the NULL symbol is detected at some reception frequency, the seek operation is stopped, whereas if the NULL symbol is not detected in the second frequency band, the seek operation is then performed in the first frequency band.

In the second aspect of the present invention, the modulated wave is typically OFDM modulated wave as well as the first aspect.

In the search method for use in a digital broadcasting receiver of the second or fourth aspect, the search operation may start automatically after a power of the digital broadcasting receiver is turned on.

### BRIEF DESCRIPTION OF THE DRAWINGS

Fig. 1 is a flow chart illustrating an operation to be executed by a search method for a digital broadcasting receiver according to the invention.
Fig. 2 is a flow chart illustrating an ensemble detecting process according to the invention.
Fig. 3 is a block diagram showing an example of a digital broadcasting receiver.
Fig. 4 is a flow chart illustrating a signal processing operation to be executed by a channel decoder.
Fig. 5 is a diagram showing the structure of a transmission frame of a DAB system.
Fig. 6 is a diagram showing examples of a frequency band and a transmission mode of DAB broadcasting.

### DETAILED DESCRIPTION OF THE PREFERRED EMBODIMENTS

Consider for example the case wherein digital broadcasting such as DAB broadcasting modulated by OFDM is performed in a plurality of predetermined frequency bands and the transmission frame period of a transmission signal broadcast in each frequency band is different. In such a case, a digital broadcasting receiver of this invention performs a search operation first in the frequency band of the transmission mode having a shortest transmission frame period, and if an ensemble is not detected in this frequency band, the search operation is performed in the frequency band of the transmission mode having a next shortest transmission frame period.

Embodiments of the invention will be described with reference to the accompanying drawings.

A block diagram showing the digital broadcasting receiver of the invention is generally the same as that of a conventional receiver shown in Fig. 3, and so the drawing and its description are omitted. A NULL symbol detecting means for detecting a NULL symbol is constituted of the FFT unit 17, DSP 18 and the like of the OFDM modulator 21 shown in Fig. 3. When a NULL symbol disposed at the head of the transmission frame is detected, this information is supplied to MPU 31 as a NULL detection signal.

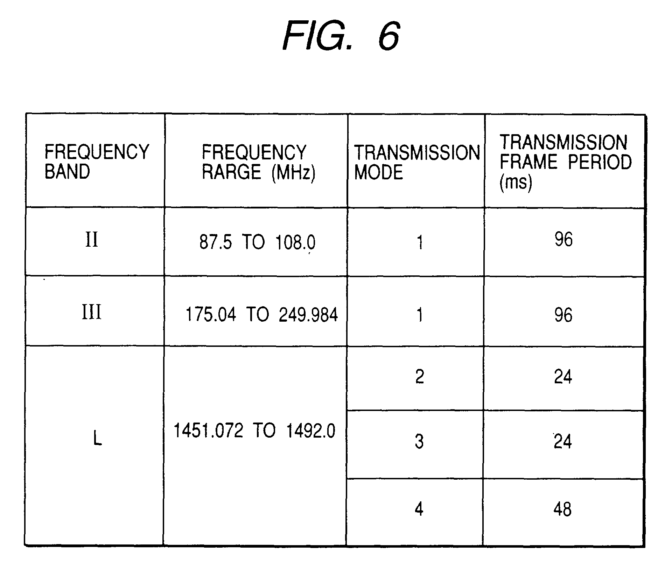

Fig. 6 is a diagram showing examples of a frequency band and a transmission mode of DAB broadcasting. Frequencies of DAB broadcasting presently recommended belong to any one of frequency bands II, III and L shown in Fig. 6. The frequency range of the band II is from 87.5 MHz to 108.0 MHz, the frequency range of the band III is from 175.04 MHz to 249.984 MHz, and the frequency range of the band L is from 1451.072 MHz to 1492.0 MHz.

As described earlier, DAB broadcasting has four different modes one of which is used by each broadcasting station. The mode 1 has the longest transmission frame period of 96 ms, the modes 2 and 3 have the shortest transmission frame period of 24 ms, and the mode 4 has the transmission frame period of 48 ms which is shorter than that of the mode 1 and longer than that of the mode 2.

The transmission mode of broadcasting in each frequency band is limited. The transmission mode 1 is used only by the bands II and III, and the transmission mode 2, 3 or 4 is used only by the band L.

The bands II and III use the transmission mode having the longest transmission frame period, and the band L does not use the transmission mode having the longest transmission frame period.

The digital broadcasting receiver and search method of this invention have been made paying attention to such characteristics.

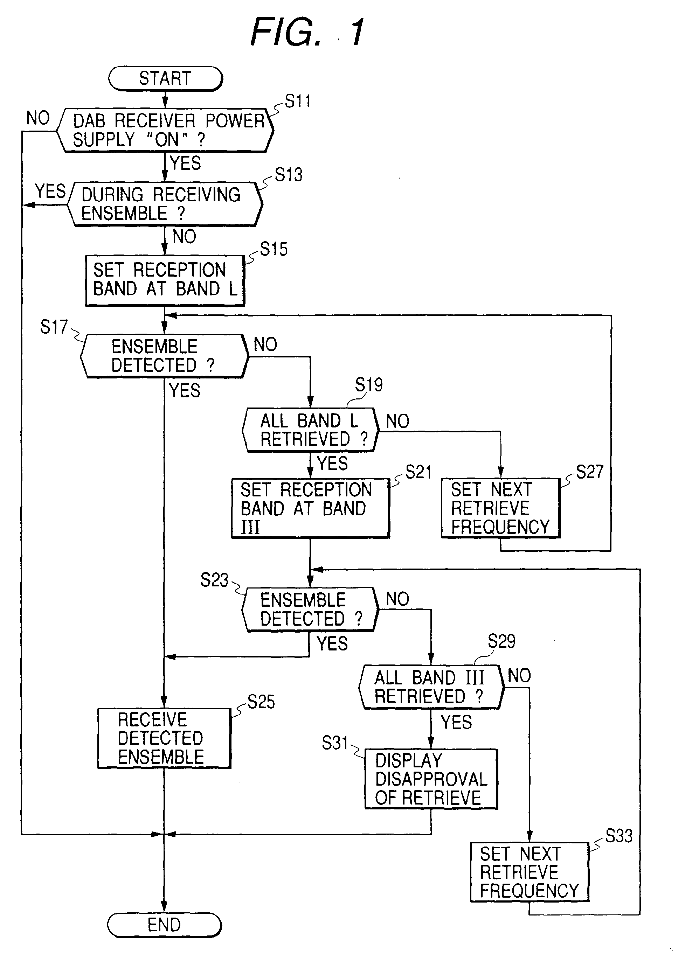

Fig. 1 is a flow chart illustrating the search method to be executed by a digital broadcasting receiver of this invention. This flow chart assumes that of the frequency bands of DAB broadcasting shown in Fig. 6, the bands III and L presently recommended are used.

The search operation of the digital broadcasting receiver of this invention is performed automatically when the power of the receiver is turned on or when a user instruction is given, to thereby search a receivable ensemble.

Referring to Fig. 1, at Step S11 it is checked whether the power of the DAB receiver is turned on. If turned on, the flow advances to Step S13, whereas if not, the search operation is terminated. At Step S13, it is checked whether an ensemble is received. This Step is performed to execute the search operation of the digital broadcasting receiver in underground while the digital broadcasting receiver is not receiving an ensemble or an apparatus other than the digital broadcasting receiver is operating.

If it is judged at Step S13 that the receiver is receiving an ensemble, the search operation is terminated, whereas if the receiver is not receiving an ensemble, the flow advances to Step S15 whereat the reception band is set to the band L. As the reception band is changed or set, PLL 14 in the front end 13 shown in Fig. 3 sets its frequency division ratio and/or frequency multiplication ratio in accordance with the new reception band.

MPU 31 stores beforehand in its storage medium a frequency list of each broadcasting station in each frequency band. At next Step S17, the broadcasting station using the lowest transmission frequency in the band L is selected from the frequency list and this information is supplied from MPU 31 to PLL 14. The front end 13 tunes in to this frequency.

Then, at Step S17 after a lapse of a predetermined time after the information of the reception frequency is supplied from MPU 31 to the front end 13, it is checked whether an ensemble is detected. If a NUL1 symbol is consecutively detected three times, the flow advances to Step S25, whereas if not, the flow advances to Step S19. At Step S25, the detected ensemble is received.

As the flow advances to Step S19 from Step S17, it is checked whether the band L is completely searched. If searched, the flow advances to Step S21, whereas if not, the flow advances to Step S27. At Step S27, the frequency to be newly searched is set. Namely, the frequency higher than the previously set frequency is read and set to thereafter return to Step S17. At Step S21, the reception band is changed from the band L to band 3 to thereafter advance to Step S23. At Step S21, the broadcasting station using the lowest transmission frequency in the band 3 is selected from the frequency list stored in the storage medium of MPU 31 and this information is supplied from MPU 31 to PLL 14 at next Step S23. The front end 13 tunes in to this frequency.

Then, at Step S23 after a lapse of a predetermined time after the information of the reception frequency is supplied from MPU 31 to the front end 13, it is checked whether an ensemble is detected. If a NUL1 symbol is consecutively detected three times, the flow advances to Step S25, whereas if not, the flow advances to Step S29. At Step S29, it is checked whether the band 3 is completely searched. If searched, the flow advances to Step S31, whereas if not, the flow advances to Step S33. At Step S33, the frequency to be newly searched is set. Namely, the frequency higher than the previously set frequency is read and set to thereafter return to Step S23. At Step S31, a message "not detected" is displayed to notify that no receivable ensemble was detected.

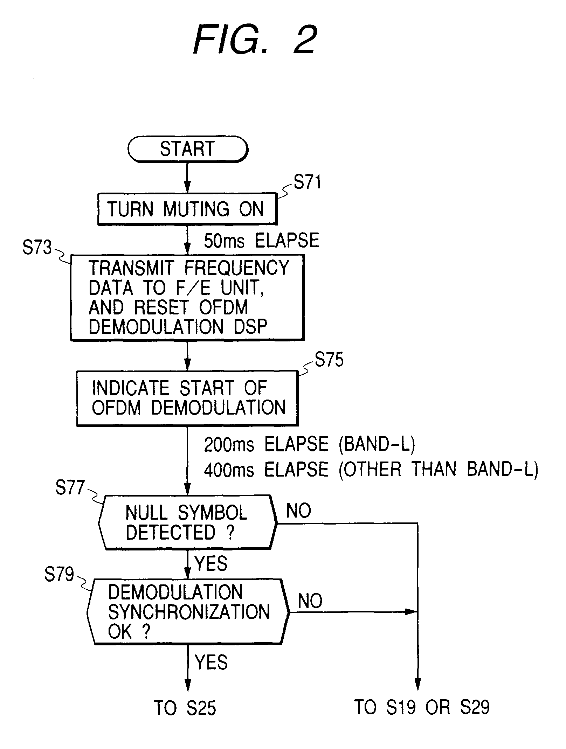

Next, a method of detecting an ensemble at Step S17 or S23 will be described with reference to Fig. 2. Fig. 2 is a flow chart illustrating the main part of an ensemble detecting process of this invention.

As shown in Fig. 2, when the search operation starts, a muting circuit is turned on at Step S71. This circuit activates an unrepresented electronic switch provided on the output side of the D/A converter 29 so as not to send the output of the D/A converter 20 to the succeeding stage. After a lapse of 50 ms, the flow advances to Step S73 whereat MPU 31 sends data of the frequency to be searched next to the front end 13, and DSP 18 of the OFDM demodulator 21 is reset. Next, at Step S75, MPU 31 instructs the OFDM demodulator 21 to start OFDM demodulation.

After a lapse of 200 ms for the band L or after a lapse of 400 ms for the band other than the band L, the flow advances to Step S77. Since the transmission mode can be known from the NULL symbol length, the wait time until the NULL symbol detection is confirmed may be controlled in accordance with the frequency band and/or transmission mode. For example, the wait time of 200 ms for the band L may be shortened to about 100 ms if the transmission mode is judged as mode 2 or 3 at an earlier timing.

At Step S77 it is checked whether a NULL symbol is detected. If not, the flow advances to Step S19 or Step S29 whereat it is checked whether the band is completely searched. If searched, the flow advances to Step S79 whereat it is checked whether synchronization of the OFDM demodulator 21 is established in 5 seconds. If not, the flow advances to Step S19 or S29, whereas if established, the flow advances to Step S25 to receive the detected ensemble.

At the ensemble detection confirmation Step S17 or S23, it may be judged that an ensemble is not detected, if an amplitude of an RF signal received at the front end 13 shown in Fig. 3 is smaller than a predetermined value.

Before the muting during the search operation is released at Step S25, the code error rate detected at the channel decoder 23 shown in Fig. 3 is checked. For example, if the error rate calculated at Step S47 shown in Fig. 4 is larger than a predetermined value, it may be judged that an ensemble is not detected.

In the digital broadcasting receiver and its search method of this invention, the search operation may be performed automatically after the power is turned on, without a user instruction of a search start. According to the digital broadcasting receiver and its search method of this invention, since the search time is short, the search operation does not hinder so much the operation of other apparatus, and sounds of the received digital broadcasting can be output in a short time after the power-on so that a muting time can be shortened. A user may set beforehand whether the search operation is performed automatically after the power-on and whether the search operation is automatically performed and the detected ensemble is received immediately to output sounds and the like.

An ensemble detected during the search operation started immediately after the power-on may not be output immediately, but channel information and the like of the detected ensemble may be stored in MPU 31 and when a user requests a reception of digital broadcasting, the detected ensemble is received based upon the stored information to output sounds and the like.

As described above in detail, according to the digital broadcasting receiver and its search method of this invention, the search operation starts first for the band L in which broadcasting of the transmission mode 1 having the longest transmission frame period is not performed. The search operation for other bands is performed if necessary after the band L. In the search operation for the digital broadcasting receiver, in order to detect a NULL symbol consecutively three times, it takes a time at least four times as long as the transmission frame period. Therefore, for example, broadcasting of the mode 1 received in the band 3 requires a time of 384 ms which is a fourfold of 96 ms, whereas broadcasting of the mode 2 or 3 received in the band L requires a time of 96 ms which is a fourfold of 24 ms, and broadcasting of the mode 4 received in the band L is 192 ms which is a fourfold of 48 ms. Since the search operation is terminated when the NULL symbol is detected consecutively three times, the search time can be shortened more than if the search operation starts from the band 3, and the muting time immediately after the digital broadcasting is received can be shortened.

## Claims

1. A digital broadcasting receiver for receiving a frequency division multiplex modulated signal transmitted in a plurality of predetermined frequency bands to reproduce a broadcasting information signal,
**CHARACTERIZED IN THAT**
a search operation is first performed for one frequency band having a shorter transmission frame length, and
if an ensemble is not found in the one frequency band, the search operation is subsequently performed for another frequency band having a longer transmission frame length.

2. A digital broadcasting receiver comprising:
a front end unit for converting a received signal of digital broadcasting into a predetermined intermediate-frequency signal, the received signal including at least a first modulated wave having a first transmission frame length and transmitted in a first frequency band and a second modulated wave having a second transmission frame length shorter than the first transmission frame length and transmitted in a second frequency band; and
NULL symbol detecting means for detecting a NULL symbol in a transmission frame of the received signal,
wherein when a seek operation is instructed, the seek operation is first performed in the second frequency band and when the NULL symbol is detected at any reception frequency, the seek operation is stopped, whereas if the NULL symbol is not detected in the second frequency band, the seek operation is subsequently performed in the first frequency band.

3. The digital broadcasting receiver according to claim 2, wherein said modulated wave is an orthogonal frequency division multiplex (OFDM) modulated wave.

4. The digital broadcasting receiver according to claims 1, 2 or 3, wherein the search operation starts automatically after a power of the digital broadcasting receiver is turned on.

5. A search method for use in a digital broadcasting receiver capable of receiving a digital broadcasting signal including at least a first modulated wave having a first transmission frame length and transmitted in a first frequency band and a second modulated wave having a second transmission frame length shorter than the first transmission frame length and transmitted in a second frequency band, wherein:
when a seek operation is instructed, the seek operation is first performed in the second frequency band and when the NULL symbol is detected at any reception frequency, the seek operation is stopped, whereas if the NULL symbol is not detected in the second frequency band, the seek operation is subsequently performed in the first frequency band.

6. The search method according to claim 5, wherein said modulated wave is an OFDM modulated wave.

7. A search method according to claim 5 or 6, wherein the search operation starts automatically after a power of the digital broadcasting receiver is turned on.
